Europäisches Patentamt

European Patent Office

Office européen des brevets

(11) Publication number: **0 211 587 B1**

(19)

(12) # EUROPEAN PATENT SPECIFICATION

(45) Date of publication of patent specification: **29.09.93**  (51) Int. Cl.5: **G01N 21/64**, G01N 33/552, G02B 6/10, C03C 13/04

(21) Application number: **86305747.7**

(22) Date of filing: **25.07.86**

(54) Dielectric waveguide for use in an assay.

(30) Priority: **31.07.85 US 760931**

(43) Date of publication of application:
**25.02.87 Bulletin 87/09**

(45) Publication of the grant of the patent:
**29.09.93 Bulletin 93/39**

(84) Designated Contracting States:
**DE FR GB IT**

(56) References cited:
**EP-A- 0 075 353**
**EP-A- 0 107 532**
**WO-A-84/00817**
**US-A- 4 403 826**

**ANALYTICAL CHEMISTRY, vol. 56, no. 1, January 1984, pages 16A,18A,20A,22A,24A,33A,34A, American Chemical Society, Easton, Pennsylvania, US; W.R. SEITZ: "Chemical sensors based on fiber optics"**

**ADVANCES IN INSTRUMENTATION, vol. 38, part 1, October 1983, pages 407-418, ISA, Research Triangel Park, NC, US; F.P. MILANOVICH et al.: "Process, product, and**

**waste stream monitoring with fiber optics"**

(73) Proprietor: **Ciba Corning Diagnostics Corp.**
**63 North Street**
**Medfield Massachusetts 02052(US)**

(72) Inventor: **Westwig, Ralph Anton**
**514 Powderhouse Road**
**Corning New York 14830(US)**

(74) Representative: **Boon, Graham Anthony et al Elkington and Fife Prospect House 8 Pembroke Road Sevenoaks, Kent TN13 1XR (GB)**

## Description

The present invention relates to a dielectric waveguide for use in spectrophotometric assays of analytes in fluids.

Optical waveguides have been used in various analytical tests. For example, in an article entitled "Optical Fiber Fluoroprobes in Clinical Analysis", Clin. Chem, 29/9, pp 1678-1682 (1983), Michale J. Sepaniak et al describe the use of quartz optical fibers and laser excitation to develop single-fiber fluoroprobes. By incorporating a single fiber within a hypodermic needle, the authors have been able to obtain in vivo measurement of the fluorescence of various therapeutic drug analytes in interstitial body fluids. Sepaniak et al state that their probe must use a laser radiation source as a fluorescence exciter.

One of the fluoroprobe designs uses a capillary action design for sampling. A length of optical fiber is stripped of its protective coating and slid inside a standard glass capillary tube, touching the walls of the capillary tube at random but not extending the whole length of the tube. This assembly is placed within a hypodermic needle.

Immunoassays using optical wave-guides have been disclosed in European Patent Applications 82 201107.8 and 81 810385.5 to Battelle Memorial Institute. The earlier 1981 application discloses a competitive rate-reaction immunoassay using fiber optics. More particularly, a glass single or multimode optical fiber having a core with an index of refraction ($N_1$) and cladding with an index of refraction ($N_2$), where $N_1 > N_2$, is coated with an antibody ($A_b$) film to form a sensor fiber.

The immunoassay is done in three steps. First, the sensor fiber is immersed into a fluid containing an antigen ($A_g$) analyte specific to $A_b$ plus a known amount of fluorescent-labelled $A_g$. A fluorescent coating forms in proportion to the $A_g$ concentration. Then, an excitation radiation is propagated down the sensor fiber core at one end. The immunoassay relies upon "evanescent wave" Phenomena, i.e., the electromagnetic field components which extend a short distance into the cladding, for a component of excitation radiation to interact with and excite the external $A_b$/tagged $A_g$ complex. Finally, fluorescence from the excited complex is "reinjected" back into and propagated down the core where it is detected at the opposite end of the fiber. The fluorescence is reflected and from from the output end where it can be separated and detected.

In a continuation-in-part application filed in 1982, Battelle describes how to control the penetration of the exciting evanescent wave into the analyte-containing fluid. Here the index of refraction of the core ($N_1$) is greater than that of the fluid ($N_2$)

such that the ratio $N_1/N_2$ permits the evanescent wave to penetrate only to the thickness of the $A_b/A_g$ complex. Thin layers of such a complex are said to require an index of refraction for the fiber which would eliminate glass.

In addition, more immunossay examples have been included, specifically, "sandwich," "limited reagent," "direct," and "sequential saturation" assays.

WO 84/00817 (Block et al) describes a dielectric waveguide for use in a spectrophotometric assay of an analyte in a fluid, the waveguide having a reactant coating thereon with which the analyte interacts, the interacting coating and analyte being operable to emit primary signal radiation.

It is an object of the present invention to provide an improved waveguide of the type just defined. The waveguide of one aspect of the present invention is characterized in that it comprises:

a) a fluorescent dopant located in the primary core which can be excited by the said primary signal radiation so as to emit a secondary signal radiation, and

b) an outer core having an index of refraction which is greater than the index of refraction of the fluid, said outer core surrounding the primary core and lacking the said dopant, the said reactant coating being on the said outer core.

It is noted that US-A-4403826 (Presby) describes a dielectric waveguide sensor having a core doped with a material which is fluorescent at the wavelength of interest.

The doped waveguide is used in the following manner. The waveguide is placed in the analyte-containing fluid. Then, either while the fiber is still in the fluid or after it has been removed, electromagnetic radiation is propagated down the waveguide core so as to irradiate the analyte, which produces a primary signal radiation. The core dopant is excited by this primary signal radiation and, in turn, emits an amplified secondary signal radiation. The last step is to detect the resulting secondary signal radiation by monitoring the core of the waveguide. Typically the waveguide is a fiber having two ends, either one of which can be monitored.

Alternatively, one can select a dopant which is excited by the initially propagated wave and thereby emits a primary signal radiation which can interact with the analyte. One can monitor absorption or quenching of the primary signal from the dopant, the amount of analyte present being proportional to the attenuation of the signal. On the other hand, a second dopant excitation method would be simply to monitor the secondary signal produced by the interaction of the analyte with the primary signal of the dopant. Of course, an apparatus useful for practicing the above method would include the following elements: an electromagnetic radiation source; a means for guiding the radiation from the source to the waveguide, either the core or the cladding, where it is propagated; a signal radiation detection means; and a means for guiding the signal radiation from the waveguide, to the detection means. All of these means are conventional and well known to the skilled artisan.

FIGURE 1 is a cross-sectional view of a doped waveguide.

FIGURE 2 is a diagrammatic view of an apparatus for use with the above waveguide.

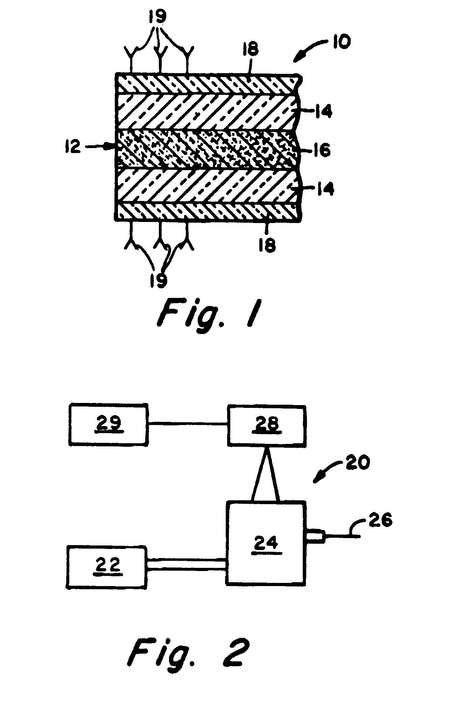

A preferred embodiment of a concentric, multiple core, doped waveguide is shown in Figure 1. The waveguide 10 comprises a cylindrical primary core 12 having an index of refraction $N_1$ covered on the outside by a secondary core 14, having an index of refraction $N_2$, and a tertiary core 18, having an index of refraction $N_3$, where $N_3 \leq N_1 > N_2$.

Those skilled in the art of optical fibers knot how to select suitable optically transmissive materials (e.g., glass and plastics) and make such a structure, therefore a detailed description of the various manufacturing processes is superfluous. However, the following disclosures are given as exemplary references on both multimode and single mode waveguide construction: U.S. 3,695,915 to Maurer et al; U.S. 3,711,262 to Keck et al; U.S. 3,775,075 to Keck et al; and U.S. 3,823,995 to Carpenter.

The primary core has a dopant 16 located throughout. The dopant is selected so as to be able to interact with a primary signal radiation arising from exciting the analyte which is present either alone or as part of an electromagnetically detectable complex or moiety, so as to yield a secondary signal radiation. By monitoring the doped waveguide core, one can detect the secondary signal which is propagated therethrough, and thus, the analyte concentration.

One method of doping a glass core with a suitable fluorescent organic dye is to use low temperature glass. U.S. Patents 4,314,031 to leon M. Sanford and Paul A. Tick and U.S. Patent 4,379,070 also to Tick describe tin-phosphorus oxyfluoride glasses which have a melting point low enough to permit incorporation of organic compounds.

The selection of a particular dopant for secondary fluorescence excitation and emission is based on the primary signal generated either by the analyte alone or in combination with an added reactant. For example, if the analyte emits a primary signal (fluoresces) at a wavelength of 625 nanometers (nm), then one dopes the core with a compound that is excited by 625 nm radiation. By monitoring the secondary flourescence from the dopant at, for example, 675 nm, one can determine the amount of analyte present.

In order to enable the waveguide to be used where the analyte is part of a complex, such as immunoassays, the waveguide cladding is covered with an immobilized react ant coating 19. The chemical composition of this coating varies according to the type of analyte being detected and the type of primary signal one is trying to generate. As for the analyte, the main requirement is that the reactant coating can bind the analyte directly and, in some cases, selectively release bound analyte. For example, if the analyte is an immunological substance (i.e., antibody, antigen, or hapten), then the reactant coating comprises a immunological substance which is secured to the core yet able to bind the analyte. Thus, an antigen analyte would require a complementary antibody to be immobilized to the core. Those of skill in the immunoassay art have applied these selective binding properties to create "sandwich", "direct", "limited reagent" and "Saturation" assays. The skilled artisan would know how to select and prepare both proper immunological substances for a reactant coating and fluorescent "tags" which would be suitable for using the doped waveguide in these assays.

On the other hand in another embodiment, if chemiluminescent production of an analyte signal is desired, then the reactant coating comprises an immobilized chemiluminescence precursor or reactant which, in the presence of analyte, results in the production of this signal. However, in this case the waveguide can be used simply as a detector of secondary fluorescence without the need for launching an excitation wavelength into the fiber.

In general, an apparatus for using these waveguides in spectrophotometric assays 20 has the five elements schematically presented in Figure 2. They are: an excitation radiation source 22; a means for guiding the excitation radiation 24 to the waveguide 26, where it is propagated; a signal radiation detection means 28; a means for guiding the signal radiation, (also 24) from the waveguide to the signal detection means; and, preferably, a recordation and processing means 29 which can collect detection data in a more permanent form.

Most of these elements are standard features on spectrophotometers. For example, the exciter can be either a dye-tunable laser or a tungsten bulb. The guide means can comprise focusing lenses, monochromameter gratings, mirrors, and wavelength - selective beam splitters. Finally, the detector and recorder can be either a photomultiplier tube or a photo-diode and a microprocessor with storage and display abilities. The design of such an apparatus would be within the skill of an optics artisan.

An important aspect of any apparatus using the present waveguides is the waveguide alignment means. That is, part of the function of the guiding means is to ensure that the excitation radiation is propagated within the waveguide. Thus, according to known optical principles the waveguide must be properly aligned with this radiation, otherwise bound analyte will not be excited by an evanescent wave of the proper wavelength. More than one gripping arrangement can be used, from as simple as a matching cylindrical guide sheath to as complicated as movable opposing jabs with precision molded grips.

The light propagation in these doped waveguide structures consists of modes with propagation constant, $\beta$, such that $E > e^{i\beta z}$, where E is the lightwave electric field amplitude and z the distance along the waveguide. Oscillatory solutions for E, i.e., bound modes, are obtained for $N_2 k < \beta < N_1 k$ where $k = \frac{2\pi}{\lambda}$ and $\lambda$ is the free space wavelength of the light. Leaky modes for which $N_3 k < \beta < N_2 k$ are also obtained, but these generally decay with length z. With a suitable combination of spot size and launch angle, the penetration of light into the analyte can be controlled.

For example, if $N_2 = N_3$ for simplicity, then the extension of the electric field into the analyte is given by

$$E \sim K_\nu (\gamma r) \text{ for } r > a$$

where 2a denotes the thickness of the core region, $\nu$ is the mode number,

$$\gamma = (N_1^2 k^2 - \beta^2)^{\frac{1}{2}},$$

and K is the modified Hankel function. This applies strictly to the case of a concentric circular fiber but may be used approximately here. The mathmatical matching of this evanescent electric field gives the value of $\gamma$. For the lowest order mode, $\nu = 0$,

$$E \sim \frac{e^{-\gamma r}}{r} \quad (\text{for } r > a)$$

Thus, the penetration distance of the light into the analyte depends on $\lambda$ which in turn depends on the mode(s) selected by the launch (initial) conditions ($\nu$), the indices of refractions of the waveguide ($N_1$ and $N_2$) and analyte ($N_3$), and the wavelength of the light ($\lambda$).

**Claims**

1. A dielectric waveguide (10) for use in a spectrophotometric assay of a fluorescent analyte in a fluid, the waveguide having a reactant coating (19) thereon with which the analyte interacts, the analyte being operable to emit primary signal radiation in the presence of incident electromagnetic radiation, the waveguide comprising a primary core (12) having an index of refraction ($N_1$) which is greater than the index of refraction of the fluid, and characterized by:
   a) a fluorescent dopant (16) located in the primary core which can be excited by the said primary signal radiation so as to emit a secondary signal radiation, and
   b) an outer core (18) having an index of refraction ($N_3$) which is greater than the index of refraction of the fluid, said outer core surrounding the primary core and lacking the said dopant, the said reactant coating (19) being on the said outer core.

2. A dielectric waveguide (10) for use in a spectrophotometric assay of an analyte in a fluid, the waveguide having a reactant coating (19) thereon with which the analyte interacts, the interacting coating being a chemiluminescent precursor or reactant and thereby operable to emit primary signal radiation, the waveguide comprising a primary core (12) having an index of refraction ($N_1$) which is greater than the index of refraction of the fluid, and characterized by:
   a) a fluorescent dopant (16) located in the primary core which can be excited by the said primary signal radiation so as to emit a secondary signal radiation, and
   b) an outer core (18) having an index of refraction ($N_3$) which is greater than the index of refraction of the fluid, said outer core surrounding the primary core and lacking the said dopant, the said reactant coating (19) being on the said outer core.

3. A dielectric waveguide according to claim 1 or 2, comprising a further core (14) having an index of refraction ($N_2$) which is also greater than that of the fluid, the said further core (14) being located between the primary core (12) and the said outer core (18), so as to form a three-component waveguide.

4. The dielectric waveguide of claim 1, 2 or 3, wherein the waveguide has a fiber shape with two ends, one of which has a mirror coating.

**5.** The dielectric waveguide of claim 1, 2, 3 or 4, wherein the reactant coating (19) is an immobilized antibody, or an immobilized antigen, or an enzyme.

**6.** An apparatus for spectrophotometrically assaying an analyte comprising:
a) a dielectric waveguide (1) according to any preceding claim;
b) source means (22) for propagating radiation down the waveguide core so as to irradiate the interacting analyte and reactant coating and form the primary signal radiation;
c) detector means (28) for detecting the resulting secondary signal radiation.

**7.** A method of spectrophotometrically assaying a fluorescent analyte, using the apparatus of claim 6, comprising:
a) contacting the fluid with the said dielectric waveguide (10);
b) propagating radiation down the waveguide core from said source means (22) so as to irradiate the analyte, to cause it to emit primary signal radiation, and where the primary signal radiation causes the dopant to yield a secondary radiation signal; and
c) detecting the second radiation signal by means of said detector means (28).

**8.** A dielectric waveguide (10) for use in a spectrophotometric assay of a fluorescent analyte in a fluid, the waveguide having a reactant coating (19) thereon with which the analyte interacts, the analyte being operable in the presence of primary signal radiation to emit secondary signal radiation, the waveguide comprising a primary core (12) having an index of refraction ($N_1$) which is greater than the index of refraction of the fluid, and characterized by:
a) a fluorescent dopant (16) located in the primary core which can be excited by incoming electromagnetic radiation to emit said primary signal radiation, and
b) an outer core (18) having an index of refraction ($N_3$) which is greater than the index of refraction of the fluid, said outer core surrounding the primary core and lacking the said dopant, the said reactant coating (19) being on the said outer core.

**9.** A dielectric waveguide (10) for use in a spectrophotometric assay of an analyte in a fluid, the waveguide having a reactant coating (19) thereon with which the analyte interacts, the analyte being operable to quench primary signal radiation received thereby, the waveguide comprising a primary core (12) having an index of refraction ($N_1$) which is greater than the index of refraction of the fluid, and characterized by:
a) a fluorescent dopant (16) located in the primary core which can be excited by incoming electromagnetic radiation to emit said primary signal radiation, and
b) an outer core (18) having an index of refraction ($N_3$) which is greater than the index of refraction of the fluid, said outer core surrounding the primary core and lacking the said dopant, the said reactant coating (19) being on the said outer core.

**Patentansprüche**

**1.** Dielektrischer Wellenleiter (10) zur Verwendung in einer spektralphotometrischen Analyse für einen fluoreszierenden Analyten in einem Fluid bzw. einer Flüssigkeit,
wobei der Wellenleiter einen Reaktant- bzw. Substrat-Überzug (19) besitzt, mit welchem der Analyt wechselwirkt, wobei der Analyt in Anwesenheit einfallender elektromagnetischer Strahlung zur Emission einer Primärsignalstrahlung betriebsfähig ist,
wobei der Wellenleiter einen Primärkern (12) aufweist, welcher einen Brechungsindex ($N_1$) hat, der größer als der Brechungsindex des Fluids ist,
**gekennzeichnet durch**
a) einen fluoreszierenden, im Primärkern plazierten Dotierstoff (16), der durch die Primärsignalstrahlung angeregt werden kann, so daß eine Sekundärsignalstrahlung emittiert wird, und
b) einen äußeren Kern (18) mit einem Brechungsindex ($N_3$), der größer als der Brechungsindex des Fluids ist, wobei der äußere Kern den Primärkern ummantelt und frei von dem Dotierstoff ist, und sich der Reaktant-Überzug (19) auf dem äußeren Kern befindet.

**2.** Dielektrischer Wellenleiter (10) zur Verwendung in einer spektralphotometrischen Analyse für einen Analyten in einem Fluid bzw. einer Flüssigkeit,
wobei der Wellenleiter einen Reaktant- bzw. Substrat-Überzug (19) besitzt, mit welchem der Analyt wechselwirkt, wobei der wechselwirkende Überzug ein chemoluminiszenter Vorläufer bzw. Zwischenstoff oder Reaktant ist und dadurch zur Emission von Primärsignalstrahlung betriebsfähig ist,

wobei der Wellenleiter einen Primärkern (12) aufweist, welcher einen Brechungsindex (N₁) hat, der größer als der Brechungsindex des Fluids ist,

gekennzeichnet durch

a) einen fluoreszierenden, im Primärkern plazierten Dotierstoff (16), der durch die Primärsignalstrahlung angeregt werden kann, so daß eine Sekundärsignalstrahlung emittiert wird, und

b) einen äußeren Kern (18) mit einem Brechungsindex (N₃), der größer als der Brechungsindex des Fluids ist, wobei der äußere Kern den Primärkern ummantelt und frei von dem Dotierstoff ist, und sich der Reaktant-Überzug (19) auf dem äußeren Kern befindet.

3. Dielektrischer Wellenleiter nach Anspruch 1 oder 2, mit einem weiteren Kern (14), welcher einen Brechungsindex (N₂) hat, der ebenfalls größer als derjenige des Fluids ist, wobei der weitere Kern (14) zwischen dem Primärkern (12) und dem äußeren Kern (18) angeordnet ist, so daß ein dreikomponentiger Wellenleiter gebildet wird.

4. Dielektrischer Wellenleiter nach Anspruch 1, 2 oder 3, bei welchem der Wellenleiter eine Faserform mit zwei Enden besitzt, von denen eines einen Spiegelbelag aufweist.

5. Dielektrischer Wellenleiter nach Anspruch 1, 2, 3 oder 4, bei welchem der Reaktant-Überzug (19) ein immobilisierter Antikörper oder ein immobilisiertes Antigen oder ein Enzym ist.

6. Vorrichtung zur spektralphotometrischen Analyse eines Analyten, mit

a) einem dielektrischen Wellenleiter (10) gemäß einem der vorangegangenen Ansprüche,

b) einer Quelle (22) für die Fortpflanzung der Strahlung entlang dem Wellenleiterkern, um den wechselwirkenden Analyten und den Reaktant-Überzug zu bestrahlen und die Primärsignalstrahlung zu bilden,

c) einer Detektoreinrichtung (28) zum Erfassen der resultierenden Sekundärsignalstrahlung.

7. Ein Verfahren zur Spektralphotometrischen Analyse eines fluoreszierenden Analyten unter Verwendung der Vorrichtung nach Anspruch 6, das aufweist:

a) die Kontaktierung des Fluids mit dem dielektrischen Wellenleiter (10),

b) Fortpflanzung der Strahlung entlang des Wellenleiterkerns von der Quelle (22) zur Bestrahlung des Analyten, um ihn zur Emission einer Primärsignalstrahlung zu veranlassen, und in welchem die Primärsignalstrahlung das Dotiermittel zur Lieferung eines sekundären Strahlungssignals veranlaßt, und

c) Erfassen des sekundären Strahlungssignals mittels der Detektoreinrichtung (28).

8. Dielektrischer Wellenleiter (10) zur Verwendung in einer spektralphotometrischen Analyse für einen fluoreszierenden Analyten in einem Fluid bzw. einer Flüssigkeit,

wobei der Wellenleiter einen Reaktant- bzw. Substrat-Überzug (19) besitzt, mit welchem der Analyt wechselwirkt, wobei der Analyt in Anwesenheit einer Primärsignalstrahlung zur Emission einer Sekundärsignalstrahlung betriebsfähig ist,

wobei der Wellenleiter einen Primärkern (12) aufweist, welcher einen Brechungsindex (N₁) hat, der größer als der Brechungsindex des Fluids ist,

gekennzeichnet durch

a) einen fluoreszierenden, im Primärkern plazierten Dotierstoff (16), der durch einfallende elektromagnetische Strahlung zur Emission von Primärsignalstrahlung angeregt werden kann, und

b) einen äußeren Kern (18) mit einem Brechungsindex (N₃), der größer als der Brechungsindex des Fluids ist, wobei der äußere Kern den Primärkern ummantelt und frei von dem Dotierstoff ist, und sich der Reaktant-Überzug (19) auf dem äußeren Kern befindet.

9. Dielektrischer Wellenleiter (10) zur Verwendung in einer spektralphotometrischen Analyse für einen Analyten in einem Fluid bzw. einer Flüssigkeit,

wobei der Wellenleiter einen Reaktant- bzw. Substrat-Überzug (19) besitzt, mit welchem der Analyt wechselwirkt, wobei der Analyt zur Auslöschung dadurch erhaltener Primärsignalstrahlung betriebsfähig ist,

wobei der Wellenleiter einen Primärkern (12) aufweist, welcher einen Brechungsindex (N₁) hat, der größer als der Brechungsindex des Fluids ist,

gekennzeichnet durch

a) einen fluoreszierenden, im Primärkern plazierten Dotierstoff (16), der durch einfallende elektromagnetische Strahlung zur Emission von Primärsignalstrahlung angeregt werden kann, und

b) einen äußeren Kern (18) mit einem Brechungsindex ($N_3$), der größer als der Brechungsindex des Fluids ist, wobei der äußere Kern den Primärkern ummantelt und frei von dem Dotierstoff ist, und sich der Reaktant-Überzug (19) auf dem äußeren Kern befindet.

**Revendications**

1. Un guide d'onde diélectrique (10) pour utilisation dans un essai de spectrophotométrie pratiqué sur un échantillon d'analyse fluorescent dans un fluide, ledit guide d'onde étant enrobé d'un revêtement réactif (19) avec lequel réagit ledit échantillon d'analyse, ledit échantillon d'analyse étant utilisable pour émettre un rayonnement de signal primaire en présence d'un rayonnement électromagnétique incident, ledit guide d'onde comprenant un coeur primaire (12) d'un indice de réfraction ($N_1$) supérieur à l'indice de réfraction dudit fluide, ledit guide d'onde étant caractérisé par :

(a) un dopant fluorescent (16) se trouvant à l'intérieur du coeur, qui peut être excité par ledit rayonnement de signal primaire pour produire un rayonnement de signal secondaire, et

(b) un coeur externe (18) ayant un indice de réfraction ($N_3$) supérieur à l'indice de réfraction du fluide, ledit coeur externe entourant le coeur primaire ne contenant aucun dopant et ledit revêtement réactif (19) enrobant ledit coeur externe.

2. Un guide d'onde diélectrique (10) pour utilisation dans un essai de spectrophotométrie pratiqué sur un échantillon d'analyse dans un fluide, le guide d'onde ayant un revêtement réactif (19) avec lequel l'échantillon d'analyse réagit, ledit revêtement interactif étant un précurseur ou réactif chimioluminescent pouvant ainsi être utilisé pour émettre un rayonnement de signal primaire, ledit guide d'onde comprenant un coeur primaire (12) ayant un indice de réfraction ($N_1$) supérieur à l'indice de réfraction du fluide, et ledit guide d'onde étant caractérisé par :

(a) un dopant fluorescent (16) placé dans le coeur primaire, lequel coeur peut être excité par ledit rayonnement pour générer un rayonnement de signal secondaire, et

(b) un coeur externe (18) ayant un indice de réfraction ($N_3$) supérieur à l'indice de réfraction du fluide, ledit coeur externe enrobant le coeur primaire et ne comportant pas de dopant, ledit revêtement réactif enrobant ledit coeur extérieur.

3. Un guide d'onde diélectrique selon la revendication 1 ou 2, comprenant un coeur supplémentaire (14) ayant un indice de réfraction ($N_2$) aussi supérieur à celui du fluide, ledit coeur supplémentaire (14) étant logé entre le coeur primaire (12) et ledit coeur externe (18) de façon à former un guide d'onde à trois composantes.

4. Le guide d'onde diélectrique de la revendication 1, 2 ou 3 dans lequel ledit guide d'onde se présente sous la forme d'une fibre à deux extrémités dont une est recouverte d'un revêtement réfléchissant.

5. Le guide d'onde diélectrique selon la revendication 1, 2, 3 ou 4 dans lequel le revêtement réactif (19) est un anti-corps immobilisé ou un antigène immobilisé, ou un enzyme.

6. Un appareil utilisé pour des essais d'échantillons d'analyse en spectrophotométrie comprenant:

(a) un guide d'onde diélectrique (1), selon l'une quelconque des revendications précédentes;

(b) un moyen de source (22) pour la propagation d'un rayonnement sur toute la longueur du coeur de guide d'onde pour irradier l'échantillon d'analyse et le revêtement réactif en interaction et pour former le rayonnement de signal primaire;

(c) un moyen de détection (28) pour détecter le rayonnement de signal secondaire en résultant.

7. Un procédé d'essai d'échantillons d'analyse en spectrophotométrie utilisant l'appareil selon la revendication 6, comprenant :

(a) la mise en contact du fluide et dudit guide d'onde diélectrique (10);

(b) la propagation du rayonnement sur toute la longueur du coeur de guide d'onde depuis ledit moyen à source (22) pour irradier l'échantillon à analyser et faire émettre par ce dernier un rayonnement de signal primaire, et dans lequel ledit rayonnement de signal primaire provoque la production d'un signal de rayonnement secondaire par le dopant; et

(c) la détection dudit signal de rayonnement secondaire par ledit moyen de détection (28).

8. Un guide d'onde diélectrique (10) utilisable pour l'essai d'échantillons d'analyse fluorescents dans un fluide en spectrophotométrie, le guide d'onde étant enrobé d'un revêtement réactif (19) avec lequel réagit l'échantillon d'analyse, ledit échantillon d'analyse devenant actif en présence d'un rayonnement de signal primaire et émettant un rayonnement de signal secondaire, le guide d'onde comprenant un coeur primaire (12) ayant un indice de réfraction ($N_1$) plus élevé que l'indice de réfraction du fluide, et ledit guide d'onde étant caractérisé par :

(a) un dopant fluorescent (16) situé à l'intérieur du coeur primaire pouvant être excité par un rayonnement électromagnétique d'entrée pour émettre ledit rayonnement de signal primaire, et

(b) un coeur externe (18) ayant un indice de réfraction ($N_3$) supérieur à l'indice de réfraction du fluide, ledit coeur extérieur enrobant le coeur primaire et ne contenant pas de dopant, ledit revêtement réactif (19) enrobant ledit coeur externe.

9. Un guide d'onde diélectrique (10) utilisé en spectrophotométrie pour l'essai d'échantillons d'analyse contenus dans un fluide, le guide d'onde étant enrobé d'un revêtement réactif (19) avec lequel réagit l'échantillon d'analyse, ledit échantillon d'analyse étant utilisable pour absorber le rayonnement de signal primaire reçu de cette façon, le guide d'onde comprenant un coeur primaire (12) ayant un indice de réfraction ($N_1$) supérieur à l'indice de réfraction du fluide, et ledit guide d'onde étant caractérisé par :

(a) un dopant fluorescent (16) placé dans le coeur, ce dernier pouvant être excité par un rayonnement électromagnétique pour émettre ledit rayonnement de signal primaire; et

(b) un coeur externe (18) ayant un indice de réfraction ($N_3$) supérieur à celui du fluide, ledit coeur externe enrobant le coeur primaire et ne contenant pas ledit dopant, ledit revêtement réactif (19) enrobant ledit coeur externe.

Fig. 1

Fig. 2